# EUROPÄISCHE PATENTANMELDUNG

(11) **EP 2 165 932 A2**
(43) Veröffentlichungstag der Anmeldung: **24.03.2010**
(21) Anmeldenummer: 09160367.0
(22) Anmeldetag: 15.05.2009
(51) Int. Cl.: B64F 5/00

(54) **Transport- und Montagefahrzeug für ein Bauteilmodul**

(30) Priorität: 17.09.2008 DE 102008047779
(71) Anmelder: CLAAS Fertigungstechnik GmbH, 48361 Beelen (DE)
(72) Erfinder: Knurr, Frank, 33442 Herzebrock-Clarholz (DE)

(57) **Zusammenfassung**

Die Erfindung betrifft ein Transport- und Montagefahrzeug (1) für ein Bauteilmodul (2), wie etwa ein Flugzeugtriebwerk (3), mit einer beweglichen Plattform (21, 28), die Tragarmstrukturen (32) aufweist, auf denen das Bauteilmodul (2) während der Transport- und Wartungsarbeiten ruht und die relativ zu der Plattform (21, 28) derart bewegbar sind, dass sie wenigstens zwei Positionen einnehmen können, nämlich eine aktive Position, in der sie das Bauteilmodul (2) halten, und eine inaktive Position, in der sie das Bauteilmodul (2) freigeben und wobei die Tragarmstrukturen (32) der beweglichen Plattform (21, 28) Aufnahmeadapter (34) umfassen und die Aufnahmeadapter (34) in Längs- und Querrichtung der beweglichen Plattform (21, 28) lageveränderlich angeordnet sind. Eine solche Anordnung hat insbesondere den Vorteil, dass das Transport- und Montagefahrzeug (1) für den Transport von Bauteilmodulen unterschiedlichster Größe einsetzbar ist.

## Beschreibung

Die Erfindung betrifft ein Transport- und Montagefahrzeug für ein Bauteilmodul, wie etwa ein Flugzeugtriebwerk nach dem Oberbegriff des Anspruchs 1.

Aus der EP 0 147 246 B1 ist ein gattungsgemäßes Transportgestell für Flugzeugtriebwerke bekannt geworden, welches über eine mehrteilige Plattformstruktur verfügt. In dem dargestellten Ausführungsbeispiel umfasst die Plattformstruktur einen sogenannten Sockel und eine lösbar mit dem Sockel verbundene Rahmenstruktur, wobei die Rahmenstruktur die Halteelemente zur Aufnahme des Flugzeugtriebwerks umfasst. Indem Sockel und Rahmen lösbar miteinander verbunden sind, kann die Rahmenstruktur mit unterschiedlich dimensionierten Sockeln ausgerüstet werden, sodass das Transportgestell für den Transport unterschiedlich großer Triebwerke eingesetzt werden kann. Nachteilig bei derartigen Ausführungen ist jedoch, dass das Transportgestell für jeden Triebwerktyp einen separaten Sockel vorhalten muss, Dies erhöht die Kosten für einen flexiblen Einsatz eines solchen Transportgestells erheblich.

Weiter ist es aus dem Stand der Technik bekannt, Transportgestelle für Flugzeugtriebwerke verfahrbar auszuführen. Hier sei beispielhaft auf die DE 20 2004 015 422 U1 verwiesen, die ein verfahrbares Transportgestell zur Beförderung von Flugzeugtriebwerken offenbart, Indem das Fahrwerk des Transportgestells sogenannte Mecanumräder aufnimmt, kann das Transportgestell völlig frei auf einer Ebene verfahren werden. Dies hat insbesondere den Vorteil, dass das Transportgestell sehr flexibel auf die bei der Montage und Demontage von Flugzeugtriebwerken herrschenden räumlichen Bedingungen reagieren kann. Unabhängig von der Struktur des Fahrwerks hängt der Einsatz eines solchen Transportgestells wiederum von den Fixiermöglichkeiten für die zu befördernden Flugzeugtriebwerke ab.

Es ist deshalb Aufgabe der Erfindung die beschriebenen Nachteile des Standes der Technik zu vermeiden und insbesondere ein Transport- und Montagefahrzeug für Bauteilmodule, wie etwa Flugzeugtriebwerke bereitzustellen, welches schnell und kostengünstig an die Geometrien unterschiedlicher, von dem Transport- und Montagefahrzeug zu transportierender Bauteilmodule anpassbar ist.

Diese Aufgabe wird erfingdungsgemäß durch die kennzeichnenden Merkmale des Anspruchs 1 gelöst.

Indem das Transport- und Montagefahrzeug für ein Bauteilmodul, wie etwa ein Flugzeugtriebwerk, mit einer beweglichen Plattform, die Halterungsarme aufweist, auf denen das Bauteilmodul während der Transport- und Wartungsarbeiten ruht und die Halterungsarm der beweglichen Plattform Aufnahmeadapter umfassen, die in Längs- und Querrichtung der beweglichen Plattform lageveränderlich angeordnet sind, wird erreicht, dass das Transport- und Montagefahrzeug universell einsetzbar ist, da der Fixiermechanismus schnell und kostengünstig an die Geometrien unterschiedlicher, von dem Transport- und Montagefahrzeug zu transportierende Bauteilmodule anpassbar ist.

In einer vorteilhaften Ausgestaltung der Erfindung umfasst die bewegliche Plattform zumindest zwei einander gegenüberliegende Plattformsegmente und wobei im Zwischenraum zwischen diesen Plattformsegmenten zumindest ein Bauteilmodul anordenbar ist. Alternativ kann das Bauteilmodul auch unmittelbar auf den Plattformsegmenten aufgenommen und auf diesen fixiert werden, Derartige Anordnungen haben den Vorteil, dass das Bauteilmodul von den Aufnahmeadaptern des Transport- und Montagefahrzeugs kraftgerecht aufgenommen werden und eine Überdimensionierung der Bauteile entfallen kann.

Die Flexibilität im Transport unterschiedlichster Bauteilmodule, wie etwa unterschiedliche Typen von Flugzeugtriebwerken und Fahrwerken, wird auch dadurch noch erhöht, wenn in einer vorteilhaften Weiterbildung der Erfindung jedem Plattformsegment ein oder mehrere Aufnahmeadapter zugeordnet und die Aufnahmeadapter jedes Plattformsegments in derselben oder in verschiedenen vertikalen Position angeordnet sind.

Indem die einander gegenüberliegenden Plattformmodule aufeinander zu und voneinander weg bewegbar sind, wird eine bauraumsparende Konstruktion für die Realisierung der Querbewegung der Aufnahmeadapter bewirkt, die sicherstellt, dass das Transport- und Montagefahrzeug in der Arbeits- und Transportposition oder bei der Aufnahme von Bauteilmodulen unmittelbar auf den Plattformsegmenten eine kompakte Bauform aufweist, da die Plattformsegmente unmittelbar benachbart zueinander positionierbar sind.

Die Flexibilität des Einsatzes des erfindungsgemäßen Transport- und Montagefahrzeuges für Bauteilmodule in unterschiedlichsten Dimensionierungen wird auch dadurch noch gesteigert, wenn die Aufnahmeadapter eines Plattformsegments horizontal und/oder vertikal verschiebbar an dem jeweiligen Plattformsegment angeordnet sind.

In einer vorteilhaften Weiterbildung der Erfindung wird das Bauteilmodul von einem Transportrahmen aufgenommen, der zur Fixierung in der beweglichen Plattform Fixiertaschen aufweist, Dies hat insbesondere den Vorteil, dass das Bauteilmodul in einer ganz präzisen Lage in dem Transport- und Montagefahrzeug positioniert werden kann, die auch während der Bewegung des Transport- bund Montagefahrzeugs gehalten wird.

Indem in einer vorteilhaften Ausgestaltung der Erfindung die Fixiertaschen so an dem Transportrahmen angeordnet sind, dass die Aufnahmeadapter der beweglichen Plattformsegmente diese anfahren und in diese eingreifen können, werden die Voraussetzungen dafür geschaffen, dass das jeweilige Bauteilmodul schnell und sicher von dem Transport- und Montagefahrzeug aufgenommen oder von diesem abgegeben werden kann.

Damit beim Fahren des Transport- und Montagefahrzeugs und beim Verschwenken des Bauteilmoduls stets eine sichere Fixierung des Bauteilmoduls in dem Transport-und Montagefahrzeug gewährleistet ist, sind in einer weiteren vorteilhaften Ausgestaltung der Erfindung die Aufnahmeadapter in den Fixiertaschen arretierbar.

Eine vielfach technisch bewährte, und damit sehr zuverlässig und präzise arbeitende vertikale Positionsänderung des Bauteilmoduls wird dann erreicht, wenn die bewegliche Plattform über ein Hubsystem in ein Transport- und Montagefahrzeug integriert ist. In diesem Zusammenhang ist es von Vorteil, wenn bei geteilten Plattformen jedem Plattformsegment ein Hubsystem zugeordnet ist und jedes Plattformsegment separat oder alle beweglichen Plattformsegmente gemeinsam mittels des Hubsystems in vertikaler Richtung verfahrbar sind.

In einer vorteilhaften Ausgestaltung der Erfindung ist das Hubsystem als Hubschere ausgebildet, wobei die Hubschere hydraulisch oder mittels Spindel-Elektromotor-Kombination verfahrbar ist. Derartige System haben insbesondere den Vorteil, dass sie sehr präzise und auch in sehr kleinen Schritten oder stufenlos eine vertikale Positionsänderung des Bauteilmoduls ermöglichen.

Ein Bewegen des Transport- und Montagefahrzeugs und damit des jeweils von ihm aufgenommen Bauteilmoduls über den Boden wird in einer vorteilhaften Ausgestaltung der Erfindung dadurch erreicht, dass das Fahrwerk des Transport-und Montagefahrzeugs sogenannte Mecanumräder aufweist, die neben der völlig freien Bewegung des Transport- und Montagefahrzeugs auf dem Boden auch sehr präzise Richtungsänderungen ermöglichen. Wegen der notwendigen, sehr präzisen Ansteuerung der Mecanumräder ist es von Vorteil, wenn das Fahrwerk des Transport- und Montagefahrzeugs elektrisch angetrieben wird.

Aufgrund dessen, dass zumindest im Flugzeugbau die Montage und Demontage von Flugzeugtriebwerken in großen Höhen stattfindet, ist es von Vorteil, wenn die Plattformsegmente Tritfflächen und Werkzeugstauräume umfassen, sodass die Montageteams alle erforderlichen Werkzeuge und Instrumente mit der sich bewegenden Plattform mitführen können. Dies spart vor allem Montage- oder Demontagezeit, da sich Hilfszeiten zur Beschaffung von Werkzeugen auf ein Minimum reduzieren. Zudem können große Montageteams zugleich mehrer Montage- und Demontagetätigkeiten ausführen.

In einer weiteren, vorteilhaften Ausgestaltung der Erfindung werden die Aufnahmeadapter von Tragarmstrukturen aufgenommen, die mittels Kugelgelenk an der höhenbeweglichen Plattform oder deren Plattformsegmenten angelenkt sind. Eine solche Ausführung hat vor allem den Vorteil, dass die Aufnahmeadapter völlig frei im Raum bewegt werden können, sodass auch in kritischen Lagen positionierte Fixiertaschen von den Aufnahmeadaptern gut erreicht werden können. In diesem Zusammenhang ist es auch von Vorteil, wenn die Kugelgelenke in definierten Winkelstellungen arretierbar sind, sodass das von den Aufnahmeadaptern getragene Bauteilmodul beliebige Lagen im Raum einnehmen kann.

Um Beschädigungen am Maschinensystem und am Bauteilmodul bei der Montage oder Demontage eines Bauteilmoduls zu vermeiden, ist in einer weiteren, vorteilhaften Ausgestaltung der Erfindung vorgesehen, dass am Transportrahmen des Bauteilmoduls und/oder am Bauteilmodule und/oder an der höhenbeweglichen Plattform und/oder den höhenbeweglichen Plattformsegmenten ein Sensorsystem zur Ermittlung der Lasten oder des Anpressdrucks des Bauteilmoduls auf das das Bauteilmodule aufnehmende Maschinensystem adaptiert ist.

Weitere vorteilhafte Ausgestaltungen sind Gegenstand weiterer Unteransprüche und werden nachfolgend an Hand in mehreren Figuren dargestellter Ausführungsbeispiele beschrieben. Es zeigen:
- Figur 1: das erfindungsgemäße Transport- und Montagefahrzeug in der Seitenansicht
- Figur 2: das erfindungsgemäße Transport- und Montagefahrzeug in der Draufsicht
- Figur 3: die Montage eines Flugzeugtriebwerks an der Tragfläche eines Flugzeugs.

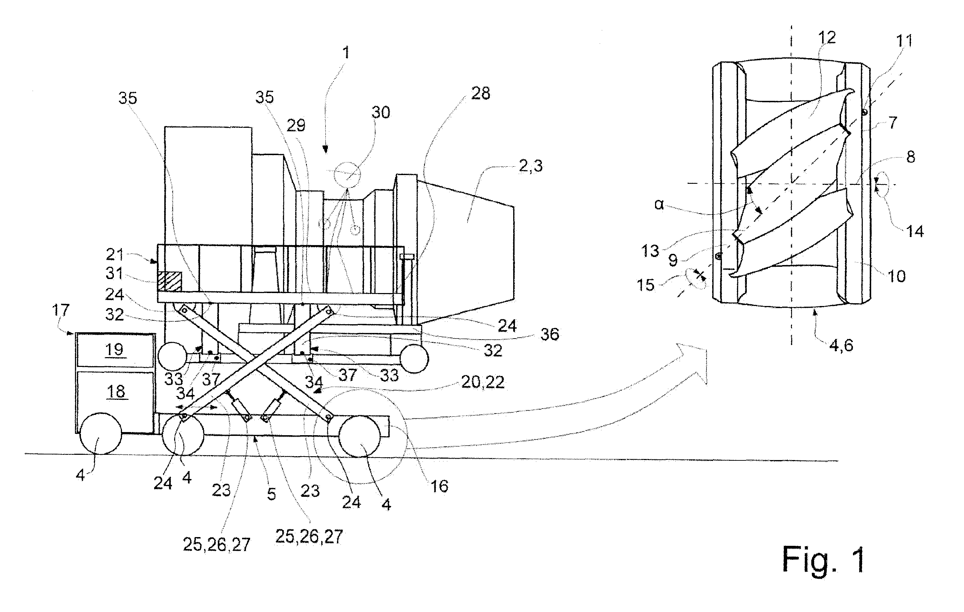

Fig. 1 zeigt in einer schematischen Ansicht ein Transport- und Montagefahrzeug 1 zum Befördern von Bauteilmodulen 2, wie etwa Flugzeugtriebwerken 3. Das Transport- und Montagefahrzeug 1 verfügt über ein, eine Vielzahl von Laufrädern 4 aufnehmendes Fahrwerk 5. Gemäß der Vergrößerung in Figur 1 sind die Laufräder 4 als sogenannte Mecanum-Räder 6 ausgeführt. Der Radkörper 7 derartiger Laufräder 4 umfasst neben der nur strich-punktiert dargestellten Laufradachse 8 beidseitig die Laufradbreite begrenzende, zueinander benachbart angeordnete Tragelemente 9, 10, welche drehfest mit der Laufradachse 8 verbunden sind. Die Tragelemente 9, 10 werden in regelmäßigen Abständen von auf einem gemeinsamen Umfangskreis liegenden Öffnungen 11 durchsetzt, Die Öffnungen 11 nehmen nicht näher dargestellte Lagersitze auf, die der Umfangsfläche des Laufrades 4 zugeordnete Rollkörper 12 abstützen. Die Rollkörper 12 werden jeweils freidrehbar von den Tragelementen 9, 10 aufgenommen, wobei die Drehachse 13 jedes Rollkörpers 12 winklig zur Laufradachse 8 des jeweiligen Laufrades 4 angeordnet ist und diese Schrägstellung der Rollkörper 12 sich durch den in der Frontansicht ergebenden Winkel □ zwischen besagter Laufradachse 8 und der jeweiligen Drehachse 13 ergibt. Indem das Laufrad 4 einerseits um seine eigene Laufradachse 8 gemäß der Pfeilrichtung 14 in und entgegen dem Uhrzeigersinn umlaufen kann und andererseits jeder Rollkörper 12 um seine Drehachse 13 gemäß Pfeilrichtung 15 ebenfalls in oder entgegen dem Uhrzeigersinn umläuft, wird ein mit derartigen Laufrädern 4 versehenes Transport- und Montagefahrzeug 1, in an sich bekannter Weise in die Lage versetzt, sehr präzise Bewegungen in unterschiedlichste Bewegungsrichtungen zu vollführen.

Das Fahrwerk 5 wird von einer Tragrahmenstruktur 16 aufgenommen, die in einem endseitigen Bereich ein Systemmodul 17 umfasst. Das Systemmodul 17 umfasst eine oder mehrere Batterien 18 zur Energieversorgung des nicht dargestellten elektrischen Antriebs der Laufräder 4. Weiter nimmt das Systemmodul 17 eine Steuereinheit 19 auf, welche alle, im folgenden noch näher beschriebenen Bewegungen des Transport- und Montagefahrzeugs 1 und seiner ebenfalls noch näher zu beschreibenden lageveränderlichen Elemente steuert. Der Tragrahmenstruktur 16 ist obenseitig ein Hubsystem 20 zugeordnet, welches an seinem obenseitigen, freien Ende die erfindungsgemäße Plattform 21 aufnimmt. Im dargestellten Ausführungsbeispiel ist das Hubsystem 20 als sogenannte Hubschere 22 ausgebildet, deren paarweise und zueinander gekreuzt angeordneten Stützträger 23 an ihren freien, oben- und untenseitigen Enden jeweils um Horizontalachsen 24 schwenkbar an der das Fahrwerk 5 aufnehmenden Tragrahmenstruktur 16 schwenkbeweglich befestigt sind, wobei jeweils das dem Systemmodul 17 zugeordnete untenseitige Ende der entsprechenden Stützträger 23 zum Ausgleich von Längenänderungen in einer nicht dargestellten horizontalen Führungsschiene verfahrbar angeordnet ist. Zudem wird jeder Stützträger 23 separat oder eine Vielzahl von Stützträgern 23 gemeinschaftlich über einen von der Tragrahmenstruktur 16 schwenkbeweglich aufgenommenen Positionsänderungsantrieb 25 geführt, der ein Aus- und Einfahren der Hubschere 22 und damit eine Lageänderung der beweglichen Plattform 21 in vertikaler Richtung ermöglicht. Zur Umsetzung der vertikalen Positionsänderung umfasst der im Ausführungsbeispiel beschriebene Positionsänderungsantrieb 25 einen oder mehrere hydraulisch oder pneumatisch druckbeaufschlagbare Hubzylinder 26. Es ist aber auch denkbar, dass der oder die Hubzylinder 26 durch eine oder mehrere, nicht dargestellte, an sich bekannte Spindel-Elektromotro-Anordnungen 27 ersetzt sind.

Damit das Transport- und Montagefahrzeug 1 den als Flugzeugtriebwerk 3 ausgeführten Bauteilmodule 2 kraftgerecht aufnehmen kann, sind der Tragrahmenstruktur 16 quer zur Längsachse des Transport- und Montagefahrzeugs 1 beidseitig jeweils ein als Hubschere 22 ausgebildetes Hubsystem 20 mit separaten Positionsänderungsantrieben 25 sowie jeweils separate Plattformsegmente 28 zugeordnet. Auf diese Weise wird es möglich, dass die Plattformsegmente 28 unabhängig voneinander höhenbeweglich geführt werden können. Denkbar ist aber auch, dass die Positionsänderungsantriebe 25 und/oder die Hubsysteme 20 der beweglichen Plattformsegmente 28 so miteinander gekoppelt sind, dass beide Plattformsegmente 28 ihre Positionen synchron ändern können. Die bewegliche Plattform 21 oder jedes der Plattformsegmente 28 weisen eine Trittfläche 29 auf, auf der sich das Montagepersonal 30 zur Montage und Demontage eines von dem Transport- und Montagefahrzeug 1 aufgenommenen Bauteilmoduls 2 bewegen kann. Zudem sind den Plattformen 21, 28 nicht näher dargestellte Werkzeugstauräume 31 zugeordnet.

Der beweglichen Plattform 21 sowie den beweglichen Plattformsegmenten 28 sind im dargestellten Ausführungsbeispiel in einem unterhalb der Trittfläche 29 liegenden Bereich zwei zueinander beabstandete Tragarmstrukturen 32 zugeordnet. Die Tragarmstrukturen 32 nehmen an ihren freien unteren Enden 33 noch näher zu beschreibende, jeweils in Richtung des zwischen den Plattformsegmenten 28 angeordneten Bauteilmoduls 2 weisende Aufnahmeadapter 34 auf. Zur Vereinfachung der Montage, Demontage und des Transports eines Bauteilmoduls 2 können die die Aufnahmeadapter 34 aufnehmenden Tragarmstrukturen 32 auch teleskopierbar ausgeführt werden, sodass die vertikale Position der Aufnahmeadapter 34 auch bei unveränderter Position der Plattformsegmente 28 feinjustierbar ist. In diesem Zusammenhang ist es auch denkbar, dass die Tragarmstrukturen 32 über Kugelgelenkmechanismen 35 von dem jeweiligen Plattformsegment 28 aufgenommen werden. Auf diese Weise wird es möglich, dass jeder Aufnahmeadapter 34 relativ zum Plattformsegment 28 jede beliebige Position einnehmen kann. Indem die Kugelsegmentmechanismen 35 in an sich bekannter und deshalb nicht näher dargestellter Weise in jeder beliebigen Position arretierbar sind, ist es auch möglich jeden Kugelgelenkmechanismus 35 in einer anderen Position zu arretieren.

Damit das jeweilige Bauteilmodul 2 zeitsparend und sicher von den Aufnahmeadapter 34 des Transport- und Montagefahrzeugs 1 aufgenommen werden kann, sind die Bauteilmodule 2 auf Transportrahmen 36 befestigt. Jeder Transportrahmen 36 wird in seinen Seitenbereichen von Fixiertaschen 37 durchsetzt, die so an dem Transportrahmen 36 positioniert sind, dass die bereits beschriebenen Aufnahmeadapter 34 der Plattformsegmente 28 des Transport- und Montagefahrzeugs 1 diese anfahren und in diese eingreifen können.

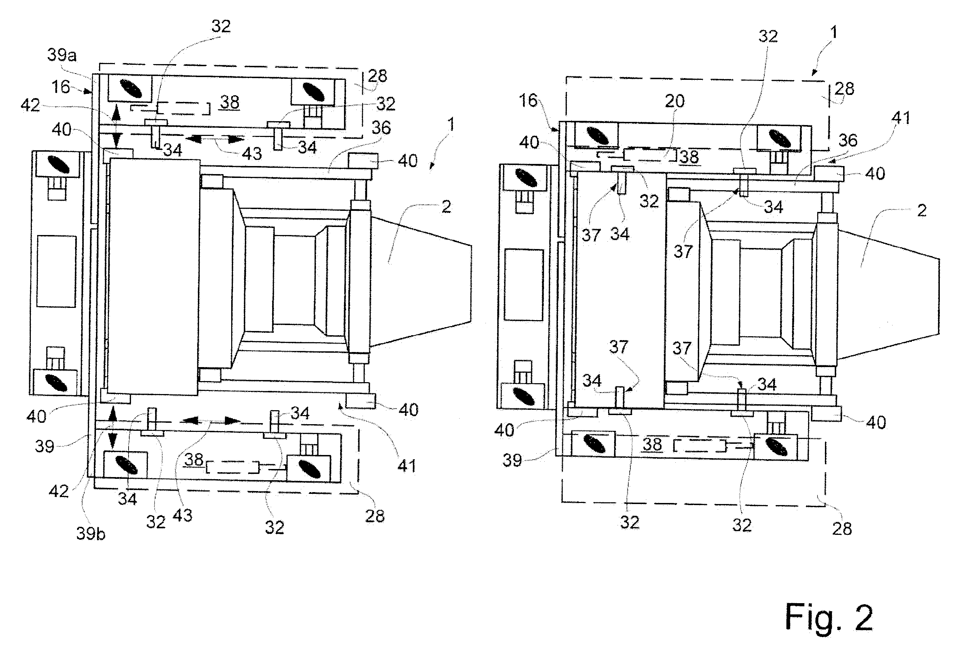

Fig. 2 zeigt schematisch den Arretiervorgang eines Bauteilmodule 2 in dem erfindungsgemäßen Transport- und Montagefahrzeug 1, wobei die rechte Abbindung der Figur 2 die Position zeigt, in der der Transportrahmen 36 von den Aufnahmeadapter 34 des Transport- und Montagefahrzeugs 1 getragen wird. Die Tragrahmenstruktur 16 des Transport- und Montagefahrzeugs 1 umfasst rechte und linke Fahrwerkmodule 38, die über einen Zentralrahmen 39 miteinander verbunden sind. Jedes der Fahrwerkmodule 38 trägt jeweils ein Hubsystem 20 und ein diesem Hubsystem 20 obenseitig zugeordnetes Plattformsegment 28. Indem der Transportrahmen 36 des Bauteilmoduls 2 über Laufräder 40 verfügt und der Bereich zwischen den Plattformsegmenten 28 wegen deren Zweiteiligkeit frei ist, kann das Bauteilmodul 2 auf einfache Weise in den Zwischenraum 41 zwischen den Plattformsegmenten 28 verfahren werden. Zur Fixierung des Transportrahmens 36 mittels der den Plattformsegmenten 28 zugeordneten Aufnahmeadapter 34 wird das jeweilige Plattformsegment 28 gemäß Pfeilrichtung 42 in Richtung des Transportrahmens 36 bewegt. In einer bevorzugten Ausführung sind die die Plattformsegmente 28 aufnehmenden rechts- und linksseitigen Zentralrahmenelemente 39a, b beispielsweise über Hubzylinderanordnungen gemeinschaftlich oder unabhängig voneinander teleskopier- oder verschiebbar, sodass die Plattformsegmente 28 des Transport- und Montagefahrzeugs 1 aufeinander zu oder voneinander weg bewegbar sind. Zugleich oder nachfolgend werden die Aufnahmeadapter 34 gemäß Pfeilrichtung 43 in Längsrichtung des Transport- und Montagefahrzeugs 1 relativ zueinander verschoben, bis die Aufnahmeadapter 34 im Bereich der jeweiligen Fixiertaschen 37 positioniert sind. Damit ergibt sich in erfindungsgemäßer Weise, dass die den Tragarmstrukturen 32 zugeordneten Aufnahmeadapter 34 in Länge- und Querrichtung des Bauteilmodule 2 lageveränderlich an dem Transport- und Montagefahrzeug 1 gemäß den Pfeilrichtungen 42, 43 angeordnet sind. Indem die Aufnahmeadapter 34 gemäß den Ausführungen zu Figur 1 über teleskopierbare Tragarmstrukturen 32 verfügen, die zugleich mittels Kugelgelenkmechanismen 35 an dem jeweiligen Plattformsegment 28 anordenbar sind, wird die Möglichkeit geschaffen, dass jeder Aufnahmeadapter 34 zum Erreichen der jeweiligen Fixiertasche 37 nahezu beliebig durch den Raum bewegt und in diesem positioniert werden kann. Indem jede einen Aufnahmeadapter 34 aufnehmende Tragarmstruktur 32 separat ansteuerbar ausgeführt ist, wird es möglich, dass die Aufnahmeadapter 34 eines Plattformsegmentes 28 oder alle Aufnahmeadapter 34 des Transport- und Montagefahrzeugs 1 in derselben oder in verschiedenen vertikalen Positionen positionierbar sind. Indem alle beschriebenen Positionsänderungsmöglichkeiten an ein und demselben Transport- und Montagefahrzeug 1 umgesetzt werden, können die Aufnahmeadapter 34 jedes Plattformsegmentes 28 horizontal und/oder vertikal verschieb- und/oder verschwenkbar an dem Transport- und Montagefahrzeug 1 angeordnet sein. Damit das Bauteilmodul 2 stets sicher von den Aufnahmeadaptern 34 des Transport- und Montagefahrzeugs 1 gehalten und bewegt wird, kann vorgesehen sein, dass die Aufnahmeadapter 34 in den Fixiertaschen 37 des Transportrahmens 36 arretiert werden. Hiefür können an sich bekannte und deshalb hier nicht beschriebene händisch betätigbare oder fernbedienbare Verriegelungseinrichtungen vorgesehen sein.

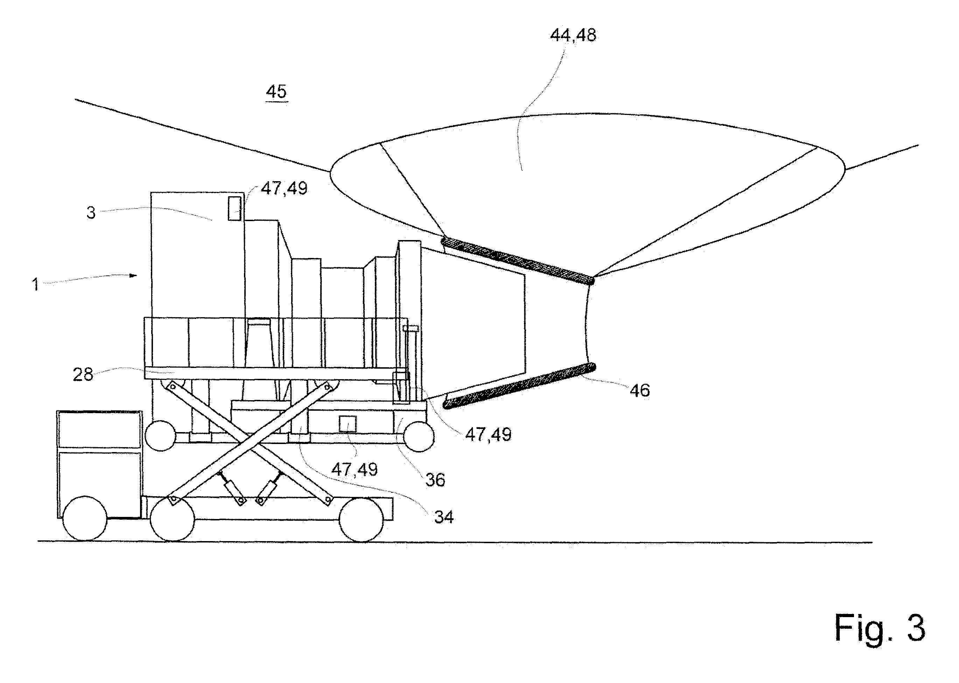

In Figur 3 ist schematisch die Montage eines neu gefertigten oder instandgesetzten Flugzeugtriebwerks 3 an der Tragfläche 44 eines Flugzeugs 45 dargestellt. Das Flugzeugtriebwerk 3 ist über seinen Transportrahmen 36 und die erfindungsgemäßen Aufnahmeadapter 34 an den Plattformsegmenten 28 des Transport- und Montagefahrzeugs 1 fixiert. Damit das Flugzeugtreibwerk 3 sanft in die der Tragfläche 44 angeformten Befestigungsaufnahmen 46 eingesetzt werden kann, ist zudem vorgesehen, dass dem Transport- und Montagefahrzeug 1 ein Sensorsystem 47 zugeordnet ist, welches den Anpressdrucks des als Flugzeugtriebwerk 3 ausgeführten Bauteilmoduls 2 auf das das Bauteilmodul 2 aufnehmende Maschinensystem 48, hier die Tragfläche 44 des Flugzeugs 45 ermittelt. Je nach verfügbarem Bauraum und nach gewünschter Messgenauigkeit können ein oder mehrere Sensorsysteme 47 vorgesehen sein, wobei die Sansorsysteme 47 am Transportrahmen 36 des Bauteilmoduls 2 und/oder am Bauteilmodul 2 und/oder an der höhenbeweglichen Plattform 21 und/oder den höhenbeweglichen Plattformsegmenten 28 adaptiert sein können. Es liegt im Rahmen der Erfindung, dass die Sensorsysteme 47 Steuereinrichtungen 49 umfassen, die schwellwertabhängig die Bewegung des Flugzeugtriebwerks 3 in Richtung der Befestigungsaufnahmen 46 der Tragfläche 44 stoppen, sobald der hinterlegt Schwellwert für einen zulässigen Anpressdruck des Bauteilmoduls 2 auf das Maschinensystem 48 erreicht oder überschritten wird.

### Bezugszeichenliste:

- 1: Transport- und Montagefahrzeug
- 2: Bauteilmodul
- 3: Flugzeugtriebwerk
- 4: Laufrad
- 5: Fahrwerk
- 6: Mecanum-Rad
- 7: Radkörper
- 8: Laufradachse
- 9: Tragelement
- 10: Tragelement
- 11: Öffnung
- 12: Rollkörper
- 13: Drehachse
- 14: Pfeilrichtung
- 15: Pfeilrichtung
- 16: Tragrahmenstruktur
- 17: Systemmodul
- 18: Batterie
- 19: Steuereinheit
- 20: Hubsystem
- 21: Plattform
- 22: Hubschere
- 23: Stützträger
- 24: Horizontalachse
- 25: Positionsänderungsantrieb
- 26: Hubzylinder
- 27: Spindel-Elektromotor-Anordnung
- 28: Plattformsegment
- 29: Trittfläche
- 30: Montagepersonal
- 31: Werkzeugstauraum
- 32: Tragarmstruktur
- 33: Unteres Ende
- 34: Aufnahmeadapter
- 35: Kugelgelenkmechanismus
- 36: Transportrahmen
- 37: Fixiertasche
- 38: Fahrwerkmodul
- 39a,b: Zentralrahmen
- 40: Laufrad
- 41: Zwischenraum
- 42: Pfeilrichtung
- 43: Pfeilrichtung
- 44: Tragfläche
- 45: Flugzeug
- 46: Befestigungsaufnahme
- 47: Sensorsystem
- 48: Maschinensystem
- 49: Steuereinrichtung

- □: Winkel

## Patentansprüche

1. Transport- und Montagefahrzeug für ein Bauteilmodul (2), wie etwa ein Flugzeugtriebwerk (3), mit einer beweglichen Plattform (21), die Tragarmstrukturen (32) aufweist, auf denen das Bauteilmodul (2) während der Transpert- und Wartungsarbeiten ruht und die relativ zu der Plattform (21) derart bewegbar sind, dass sie wenigstens zwei Positionen einnehmen können, nämlich eine aktive Position, in der sie das Bauteilmodul (2) halten, und eine inaktive Position, in der sie das Bauteilmodule (2) freigeben,
**dadurch gekennzeichnet,**
**dass** die Tragarmstrukturen (32) der beweglichen Plattform (21, 28) Aufnahmeadapter (34) umfassen und die Aufnahmeadapter (34) in Längs- und Querrichtung (42, 43) der beweglichen Plattform (21, 28) lageveränderlich angeordnet sind.

2. Transport- und Montagefahrzeug für ein Bauteilmodul (2), wie etwa ein Flugzeugtriebwerk (3), mit einer beweglichen Plattform (21) nach Anspruch 1,
**dadurch gekennzeichnet,**
**dass** die bewegliche Plattform (21) zumindest zwei einander gegenüberliegende Plattformsegmente (28) umfasst und im Zwischenraum (41) zwischen den Plattformsegmenten (28) zumindest ein Bauteilmodul (2) anordenbar ist.

3. Transport- und Montagefahrzeug für ein Bauteilmodule (2), wie etwa ein Flugzeugtriebwerk (3), mit einer beweglichen Plattform (21) nach einem der vorhergehenden Ansprüche,
**dadurch gekennzeichnet,**
**dass** der beweglichen Plattform (21) oder jedem Plartformsegment (28) ein oder mehrere Aufnahmeadapter (34) zugeordnet sind und die Aufnahmeadapter (34) in derselben oder in verschiedenen vertikalen Position angeordnet sind.

4. Transport- und Montagefahrzeug für ein Bauteilmodul (2), wie etwa ein Flugzeugtriebwerk (3), mit einer beweglichen Plattform (21) nach einem der vorhergehenden Ansprüche,
**dadurch gekennzeichnet,**
**dass** die einander gegenüberliegenden Plattformsegmente (28) aufeinander zu und voneinander weg bewegbar sind.

5. Transport- und Montagefahrzeug für ein Bauteilmodule (2), wie etwa ein Flugzeugtriebwerk (3), mit einer beweglichen Plattform (21) nach einem der vorhergehenden Ansprüche,
**dadurch gekennzeichnet,**
**dass** die Aufnahmeadapter (34) eines Plattformsegments (28) horizontal und/oder vertikal verschieb- oder verschwenkbar in dem Transport- und Montagefahrzeug (1) angeordnet sind.

6. Transport- und Montagefahrzeug für ein Bauteilmodule (2), wie etwa ein Flugzeugtriebwerk (3), mit einer beweglichen Plattform (21) nach einem der vorhergehenden Ansprüche,
**dadurch gekennzeichnet,**
**dass** der Bauteilmodul (2) von einem Transportrahmen (36) aufgenommen wird und der Transportrahmen (36) zur Fixierung in der beweglichen Plattform (21) Fixiertaschen (37) aufweist.

7. Transport- und Montagefahrzeug für ein Bauteilmodul (2), wie etwa ein Flugzeugtriebwerk (3), mit einer beweglichen Plattform (21) nach Anspruch 6,
**dadurch gekennzeichnet,**
**dass** die Fixiertaschen (37) so an dem Transportrahmen (36) angeordnet sind, dass die Aufnahmeadapter (34) der beweglichen Plattformsegmente (28) diese anfahren und in diese eingreifen können.

8. Transport- und Montagefahrzeug für ein Bauteilmodul (2), wie etwa ein Flugzeugtriebwerk (3), mit einer beweglichen Plattform (21) nach Anspruch 7,
**dadurch gekennzeichnet,**
**dass** die Aufnahmeadapter (34) in den Fixiertaschen (37) arretiert werden.

9. Transport- und Montagefahrzeug für ein Bauteilmodul (2), wie etwa ein Flugzeugtriebwerk (3), mit einer beweglichen Plattform (21) nach einem der vorhergehenden Ansprüche,
**dadurch gekennzeichnet,**
**dass** die bewegliche Plattform (21) oder die beweglichen Plattformsegmente (28) über ein Hubsystem (20) in das Transport- und Montagefahrzeug (1) integriert sind.

10. Transport- und Montagefahrzeug für ein Bauteilmodul (2), wie etwa ein Flugzeugtriebwerk (3), mit einer beweglichen Plattform (21) nach Anspruch 9,
**dadurch gekennzeichnet,**
**dass** jedes der beweglichen Plattformsegmente (28) separat oder alle beweglichen Plattformsegmente (28) gemeinsam mittels des Hubsystems (20) in vertikaler Richtung verfahrbar sind.

11. Transport- und Montagefahrzeug für ein Bauteilmodul (2), wie etwa ein Flugzeugtriebwerk (3), mit einer beweglichen Plattform (21) nach einem der vorhergehenden Ansprüche,
**dadurch gekennzeichnet,**
**dass** jedem beweglichen Plattformsegment (28) oder der beweglichen Plattform (21) ein Hubsystem (20) zugeordnet ist und das Hubsystem (20) als Hubschere (22) ausgebildet ist.

12. Transport- und Montagefahrzeug für ein Bauteilmodul (2), wie etwa ein Flugzeugtriebwerk (3), mit einer beweglichen Plattform (21) nach Anspruch 11,
**dadurch gekennzeichnet,**
**dass** die Hubschere (22) hydraulisch oder mittels Spindel-Elektromotor-Kombination (27) verfahrbar ist.

13. Transport- und Montagefahrzeug für ein Bauteilmodul (2), wie etwa ein Flugzeugtriebwerk (3), mit einer beweglichen Plattform (21) nach einem der vorhergehenden Ansprüche,
**dadurch gekennzeichnet,**
**dass** dem Transport- und Montagefahrzeug (1) ein Mecanumräder (6) aufnehmendes Fahrwerk (5) zugeordnet ist.

14. Transport- und Montagefahrzeug für ein Bauteilmodul (2), wie etwa ein Flugzeugtriebwerk (3), mit einer beweglichen Plattform (21) nach einem der vorhergehenden Ansprüche,
**dadurch gekennzeichnet,**
**dass** das Transport- und Montagefahrzeug (1) elektrisch angetrieben wird.

15. Transport- und Montagefahrzeug für ein Bauteilmodule (2), wie etwa ein Flugzeugtriebwerk (3), mit einer beweglichen Plattform (21) nach einem der vorhergehenden Ansprüche,
**dadurch gekennzeichnet,**
**dass** zumindest die bewegliche Plattform (21) oder jedes der beweglichen Plattformsegmente (28) eine Trittfläche (29) und Werkzeugstauräume (31) umfasst.

16. Transport- und Montagefahrzeug für ein Bauteilmodul (2), wie etwa ein Flugzeugtriebwerk (3), mit einer beweglichen Plattform (21) nach einem der vorhergehenden Ansprüche,
**dadurch gekennzeichnet,**
**dass** die Aufnahmeadapter (34) von Tragarmstrukturen (32) aufgenommen werden, die mittels Kugelgelenken (35) an der höhenbeweglichen Plattform (21) oder den Platformsegmenten (28) angelenkt sand.

17. Transport- und Montagefahrzeug für ein Bauteilmodul (2), wie etwa ein Flugzeugtriebwerk (3), mit einer beweglichen Plattform (21) nach Anspruch 16
**dadurch gekennzeichnet,**
**dass** die Kugelgelenke (35) in definierten Winkelstellungen arretierbar sind.

18. Transport- und Montagefahrzeug für ein Bauteilmodul (2), wie etwa ein Flugzeugtriebwerk (3), mit einer beweglichen Plattform (21) nach einem der vorhergehenden Ansprüche,
**dadurch gekennzeichnet,**
**dass** am Transportrahmen (36) des Bauteilmoduls (2) und/oder am Bauteilmodul (2) und/oder an der höhenbeweglichen Plattform (21) und/oder den höhenbeweglichen Platformsegmenten (28) ein Sensorsystem (47) zur Ermittlung der Lasten oder des Anpressdrucks des Bauteilmoduls (2) auf das das Bauteilmodul (2) aufnehmende Maschinensystem (48) angeordnet ist.
